# EUROPEAN PATENT APPLICATION

(11) **EP 4 557 866 A1**
(43) Date of publication of application: **21.05.2025**
(21) Application number: 23854109.8
(22) Date of filing: 28.06.2023
(51) Int. Cl.: H04W 74/00

(54) **COMMUNICATION METHOD, APPARATUS AND SYSTEM**

(30) Priority: 15.08.2022 CN 202210977238
(71) Applicant: Huawei Technologies Co., Ltd., Shenzhen, Guangdong 518129 (CN)
(72) Inventor: LI, Chenwan, Shenzhen, Guangdong 518129 (CN); CHEN, Lei, Shenzhen, Guangdong 518129 (CN); WU, Yiling, Shenzhen, Guangdong 518129 (CN)
(74) Representative: Goddar, Heinz J.
(86) International application number: PCT/CN2023/103419
(87) International publication number: WO 2024/037204

(57) **Abstract**

Embodiments of this application provide a communication method, apparatus, and system, and provide an access procedure in which a device actively initiates access. The communication method includes: A first device sends configuration information to a second device, where the configuration information is used by the second device to determine a first time domain resource and/or a first frequency domain resource for sending a first message when the second device actively initiates access, and the first message is used by the second device to request to access the first device. When failing to receive the first message from the second device on the first time domain resource and/or the first frequency domain resource, the first device sends a second message to the second device, where the second message indicates the second device to access the first device again.

## Description

This application claims priority to Chinese Patent Application No. 202210977238.4, filed with the China National Intellectual Property Administration on August 15, 2022 and entitled "COMMUNICATION METHOD, APPARATUS, AND SYSTEM", which is incorporated herein by reference in its entirety.

### TECHNICAL FIELD

This application relates to the field of communication technologies, and in particular, to a communication method, apparatus, and system.

### BACKGROUND

In a radio frequency identification (radio frequency identification, RFID) technology, an existing service is a terminal device terminated (mobile terminated, MT) service. In other words, a conventional technology supports only a terminal device access procedure triggered by a network device. The MT service may also be referred to as a mobile terminal device terminated service or a mobile terminal device call service.

However, when a terminal device has terminal device originated or mobile terminal device originated (mobile originated, MO) service data and/or signaling, for example, when the terminal device reports sensor data to the network device, and the terminal device initiates a registration procedure, if an existing terminal device access procedure triggered by the network device is used, the MO service data and/or signaling may fail to be reported to the network device in time. Specifically, the network device cannot accurately learn when the terminal device needs to perform transmission of the MO service data and/or signaling. Therefore, the transmission of the MO service data and/or signaling can be completed only after the terminal device is paged by the network device and an access procedure is accordingly triggered.

### SUMMARY

Embodiments of this application provide a communication method, apparatus, and system, and provide an access procedure in which a device actively initiates access.

To achieve the foregoing objective, embodiments of this application use the following technical solutions: According to a first aspect, a communication method is provided, and an apparatus for performing the communication method may be a first device, or may be a module used in the first device, for example, a chip or a chip system. The following provides descriptions by using an example in which an execution body is the first device. A first device sends configuration information to a second device, where the configuration information is used by the second device to determine a first time domain resource and/or a first frequency domain resource for sending a first message when the second device actively initiates access, and the first message is used by the second device to request to access the first device. When failing to receive the first message from the second device on the first time domain resource and/or the first frequency domain resource, the first device sends a second message to the second device, where the second message indicates the second device to access the first device again.

In the communication method provided in this embodiment of this application, the second device determines to send the first message to the first device when actively initiating the access, to request to access the first device. In other words, an access procedure is actively initiated by the second device. When the second device needs to perform transmission of uplink data and/or signaling, the second device can trigger the access procedure without waiting for paging of the first device. Therefore, the second device can send the uplink data and/or signaling to the first device in time. In addition, when failing to receive the first message, the first device indicates, by using the second message, the second device to access the first device again, so that a success rate of accessing the first device by the second device can be increased, to ensure the transmission of the uplink data and/or the signaling.

With reference to the first aspect, in a possible implementation, the second message includes first indication information and/or the first time domain resource and/or the first frequency domain resource. The first indication information and/or the first time domain resource and/or the first frequency domain resource indicate/indicates the second device that fails to access the first device on the first time domain resource and/or the first frequency domain resource to access the first device again. In this solution, the first device fails to receive the first message. In other words, the second device fails the access. The second message may include the first time domain resource and/or the first frequency domain resource, and may indicate the second device that fails to access the first device on the first time domain resource and/or the first frequency domain resource to access the first device again.

With reference to the first aspect, in a possible implementation, the second message is further used by the second device to determine a second time domain resource and/or a second frequency domain resource for sending a third message, and the third message is used by the second device to request again to access the first device. In this solution, the second message may be further used to determine the second time domain resource and/or the second frequency domain resource, so that the second device can send the third message on the second time domain resource and/or the second frequency domain resource, to initiate the access procedure again.

With reference to the first aspect, in a possible implementation, the method further includes: When successfully receiving the first message from the second device on the first time domain resource and/or the first frequency domain resource, the first device sends second indication information to the second device, where the second indication information indicates that the second device succeeds in the access. In this solution, the successful access indicates that an association relationship is established between the first device and the second device. After completing the access, the second device may perform transmission of data and/or signaling with the first device.

With reference to the first aspect, in a possible implementation, that the second message indicates the second device to access the first device again includes: The second message indicates the second device whose first information is a first value to access the first device again. A value of the first information of a device that actively initiates access and that fails the access is the first value; and a value of the first information of a device that actively initiates access and succeeds in the access or a value of the first information of a device that does not actively initiate access is a second value. In this solution, the second message indicates the second device whose first information is the first value to access the first device again. If the device whose first information is the second value receives the second message, the device does not initiate the access procedure. Therefore, this solution does not affect communication of the device whose first information is the second value. In other words, this solution does not cause the device whose first information is the second value to access the first device.

With reference to the first aspect, in a possible implementation, the first information is defined for actively initiating access by a device, and the first information is used by the first device to indicate, to initiate access, a device that actively performs access or indicate, to perform access again, a device that actively initiates access but fails the access. In this solution, the first information may be added, and is specially used in a scenario of the active initiation by the device, so that the first information is not easily confused with another flag bit.

With reference to the first aspect, in a possible implementation, the first information is further used by the first device to indicate, when a service is triggered through paging, a paged device to perform access or indicate a paged device to perform access again after the paged device fails the access. In this solution, the first information may be reused with a flag bit used in an access scenario of the paged device, so that hardware or software implementation complexity of the device can be reduced.

With reference to the first aspect, in a possible implementation, the first message includes a random number, and the method further includes: The first device sends a fourth message to the second device, where the fourth message includes third indication information indicating to use two-step random access, or the fourth message includes configuration information corresponding to two-step random access. In this solution, the first device may notify the second device to initiate the access by using a two-step random access procedure, so that the access procedure of the second device can be effectively simplified.

With reference to the first aspect, in a possible implementation, the first message includes a preamble or a random number, and the method further includes: The first device sends a fifth message to the second device, where the fifth message includes fourth indication information indicating to use four-step random access, or the fifth message includes configuration information corresponding to four-step random access.

According to a second aspect, a communication method is provided, and an apparatus for performing the communication method may be a second device, or may be a module used in the second device, for example, a chip or a chip system. The following provides descriptions by using an example in which an execution body is the second device. A second device receives configuration information from a first device, where the configuration information is used by the second device to determine a first time domain resource and/or a first frequency domain resource for sending a first message when the second device actively initiates access, and the first message is used by the second device to request to access the first device. When actively initiating the access, the second device sends the first message to the first device on the first time domain resource and/or the first frequency domain. When the first device fails to receive the first message from the second device on the first time domain resource and/or the first frequency domain resource, the second device receives a second message from the first device, where the second message indicates the second device to access the first device again.

With reference to the second aspect, in a possible implementation, the second message includes first indication information and/or the first time domain resource and/or the first frequency domain resource. The first indication information and/or the first time domain resource and/or the first frequency domain resource indicate/indicates the second device that fails to access the first device on the first time domain resource and/or the first frequency domain resource to access the first device again.

With reference to the second aspect, in a possible implementation, the second message is further used by the second device to determine a second time domain resource for sending a third message, and the third message is used by the second device to request again to access the first device.

With reference to the second aspect, in a possible implementation, the method further includes: When the first device successfully receives the first message from the second device on the first time domain resource and/or the first frequency domain resource, the second device receives second indication information from the first device, where the second indication information indicates that the second device succeeds in the access.

With reference to the second aspect, in a possible implementation, after the second device receives second indication information from the first device, the method further includes: The second device changes first information from a first value to a second value. A value of the first information of a device that actively initiates access and that fails the access is the first value; and a value of the first information of a device that actively initiates access and succeeds in the access or a value of the first information of a device that does not actively initiate access is the second value.

With reference to the second aspect, in a possible implementation, before the second device sends the first message to the first device on the first time domain resource and/or the first frequency domain resource, when the second device sends the first message to the first device on the first time domain resource and/or the first frequency domain resource, or after the second device sends the first message to the first device on the first time domain resource and/or the first frequency domain resource and before the second device receives second indication information from the first device, the method further includes: The second device changes the first information from the second value to the first value.

With reference to the second aspect, in a possible implementation, that the second message indicates the second device to access the first device again includes: The second message indicates the second device whose first information is the first value to access the first device again.

With reference to the second aspect, in a possible implementation, the first information is defined for actively initiating access by a device, and the first information is used by the first device to indicate, to initiate access, a device that actively performs access or indicate, to perform access again, a device that actively initiates access but fails the access.

With reference to the second aspect, in a possible implementation, the first information is further used by the first device to indicate, when a service is triggered through paging, a paged device to perform access or indicate a paged device to perform access again after the paged device fails the access.

With reference to the second aspect, in a possible implementation, the first message includes a random number, and the method further includes: The second device receives a fourth message from the first device, where the fourth message includes third indication information indicating to use two-step random access, or the fourth message includes configuration information corresponding to two-step random access.

With reference to the second aspect, in a possible implementation, the first message includes a preamble or a random number, and the method further includes: The second device receives a fifth message from the first device, where the fifth message includes fourth indication information indicating to use four-step random access, or the fifth message includes configuration information corresponding to four-step random access.

According to a third aspect, a first device is provided, configured to implement the foregoing method. The first device includes a corresponding module, unit, or means (means) for implementing the foregoing method. The module, unit, or means may be implemented by hardware or software, or implemented by hardware executing corresponding software. The hardware or the software includes one or more modules or units corresponding to the foregoing functions.

With reference to the third aspect, in a possible implementation, the first device includes a transceiver module. The transceiver module is configured to send configuration information to a second device, where the configuration information is used by the second device to determine a first time domain resource and/or a first frequency domain resource for sending a first message when the second device actively initiates access, and the first message is used by the second device to request to access the first device. The transceiver module is further configured to: when failing to receive the first message from the second device on the first time domain resource and/or the first frequency domain resource, send a second message to the second device, where the second message indicates the second device to access the first device again.

With reference to the third aspect, in a possible implementation, the second message includes first indication information and/or the first time domain resource and/or the first frequency domain resource. The first indication information and/or the first time domain resource and/or the first frequency domain resource indicate/indicates the second device that fails to access the first device on the first time domain resource and/or the first frequency domain resource to access the first device again.

With reference to the third aspect, in a possible implementation, the second message is further used by the second device to determine a second time domain resource and/or a second frequency domain resource for sending a third message, and the third message is used by the second device to request again to access the first device.

With reference to the third aspect, in a possible implementation, the transceiver module is further configured to: when successfully receiving the first message from the second device on the first time domain resource and/or the first frequency domain resource, send second indication information to the second device, where the second indication information indicates that the second device succeeds in the access.

With reference to the third aspect, in a possible implementation, that the second message indicates the second device to access the first device again includes: The second message indicates the second device whose first information is a first value to access the first device again. A value of the first information of a device that actively initiates access and that fails the access is the first value; and a value of the first information of a device that actively initiates access and succeeds in the access or a value of the first information of a device that does not actively initiate access is a second value.

With reference to the third aspect, in a possible implementation, the first information is defined for actively initiating access by a device, and the first information is used by the first device to indicate, to initiate access, a device that actively performs access or indicate, to perform access again, a device that actively initiates access but fails the access.

With reference to the third aspect, in a possible implementation, the first information is further used by the first device to indicate, when a service is triggered through paging, a paged device to perform access or indicate a paged device to perform access again after the paged device fails the access.

With reference to the third aspect, in a possible implementation, the first message includes a random number. The transceiver module is further configured to send a fourth message to the second device, where the fourth message includes third indication information indicating to use two-step random access, or the fourth message includes configuration information corresponding to two-step random access.

With reference to the third aspect, in a possible implementation, the first message includes a preamble or a random number. The transceiver module is further configured to send a fifth message to the second device, where the fifth message includes fourth indication information indicating to use four-step random access, or the fifth message includes configuration information corresponding to four-step random access.

According to a fourth aspect, a second device is provided, configured to implement the foregoing method. The second device includes a corresponding module, unit, or means (means) for implementing the foregoing method. The module, unit, or means may be implemented by hardware or software, or implemented by hardware executing corresponding software. The hardware or the software includes one or more modules or units corresponding to the foregoing functions.

With reference to the fourth aspect, in a possible implementation, the second device includes a transceiver module, where the transceiver module is configured to receive configuration information from a first device. The configuration information is used by the second device to determine a first time domain resource and/or a first frequency domain resource for sending a first message when the second device actively initiates access, and the first message is used by the second device to request to access the first device. The transceiver module is further configured to: when actively initiating access, send the first message to the first device on the first time domain resource and/or the first frequency domain. The transceiver module is further configured to: when the first device fails to receive the first message from the second device on the first time domain resource and/or the first frequency domain resource, receive a second message from the first device, where the second message indicates the second device to access the first device again.

With reference to the fourth aspect, in a possible implementation, the second message includes first indication information and/or the first time domain resource and/or the first frequency domain resource. The first indication information and/or the first time domain resource and/or the first frequency domain resource indicate/indicates the second device that fails to access the first device on the first time domain resource and/or the first frequency domain resource to access the first device again.

With reference to the fourth aspect, in a possible implementation, the second message is further used by the second device to determine a second time domain resource for sending a third message, and the third message is used by the second device to request again to access the first device.

With reference to the fourth aspect, in a possible implementation, the transceiver module is further configured to: when the first device successfully receives the first message from the second device on the first time domain resource and/or the first frequency domain resource, receive second indication information from the first device, where the second indication information indicates that the second device succeeds in the access.

With reference to the fourth aspect, in a possible implementation, the second device further includes a processing module, where the processing module is configured to: after the second indication information from the first device is received via the transceiver module, change first information from a first value to a second value. A value of the first information of a device that actively initiates access and that fails the access is the first value; and a value of the first information of a device that actively initiates access and succeeds in the access or a value of the first information of a device that does not actively initiate access is the second value.

With reference to the fourth aspect, in a possible implementation, the processing module is further configured to: before the first message is sent to the first device on the first time domain resource and/or the first frequency domain resource via the transceiver module, when the first message is sent to the first device on the first time domain resource and/or the first frequency domain resource via the transceiver module, or after the first message is sent to the first device on the first time domain resource and/or the first frequency domain resource via the transceiver module and before the second indication information is received from the first device via the transceiver module, change the first information from the second value to the first value.

With reference to the fourth aspect, in a possible implementation, that the second message indicates the second device to access the first device again includes: The second message indicates the second device whose first information is the first value to access the first device again.

With reference to the fourth aspect, in a possible implementation, the first information is defined for actively initiating access by a device, and the first information is used by the first device to indicate, to initiate access, a device that actively performs access or indicate, to perform access again, a device that actively initiates access but fails the access.

With reference to the fourth aspect, in a possible implementation, the first information is further used by the first device to indicate, when a service is triggered through paging, a paged device to perform access or indicate a paged device to perform access again after the paged device fails the access.

With reference to the fourth aspect, in a possible implementation, the first message includes a random number. The transceiver module is further configured to receive a fourth message from the first device, where the fourth message includes third indication information indicating to use two-step random access, or the fourth message includes configuration information corresponding to two-step random access.

With reference to the fourth aspect, in a possible implementation, the first message includes a preamble or a random number. The transceiver module is further configured to receive a fifth message from the first device, where the fifth message includes fourth indication information indicating to use four-step random access, or the fifth message includes configuration information corresponding to four-step random access.

According to a fifth aspect, a communication system is provided, including a first device that performs the method according to the first aspect and a second device that performs the method according to the second aspect.

In the present invention, the first device may be a terminal device or a network device, and the second device is a terminal device.

According to a sixth aspect, a communication apparatus is provided, including a processor. The processor is configured to: after being coupled to a memory and reading computer instructions stored in the memory, perform, according to the instructions, the method according to the first aspect or the second aspect.

With reference to the sixth aspect, in a possible implementation, the communication apparatus further includes a memory. The memory is configured to store the computer instructions.

With reference to the sixth aspect, in a possible implementation, the communication apparatus further includes a communication interface. The communication interface is used by the communication apparatus to communicate with another device. For example, the communication interface may be a transceiver, an input/output interface, an interface circuit, an output circuit, an input circuit, a pin, a related circuit, or the like.

With reference to the sixth aspect, in a possible implementation, the communication apparatus may be a chip or a chip system. When the communication apparatus is the chip system, the communication apparatus may include a chip, or may include a chip and another discrete device.

With reference to the sixth aspect, in a possible implementation, when the communication apparatus is a chip or a chip system, the communication interface may be an input/output interface, an interface circuit, an output circuit, an input circuit, a pin, a related circuit, or the like on the chip or the chip system. The processor may alternatively be implemented as a processing circuit or a logic circuit.

According to a seventh aspect, a computer-readable storage medium is provided. The computer-readable storage medium stores instructions. When the instructions are run on a computer, the computer is enabled to perform the method according to the first aspect or the second aspect.

According to an eighth aspect, a computer program product is provided. When the computer program product runs on a computer, the computer is enabled to perform the method according to the first aspect or the second aspect.

For technical effects brought by any one of the possible implementations of the second aspect to the eighth aspect, refer to technical effects brought by different implementations of the first aspect. Details are not described herein again.

### BRIEF DESCRIPTION OF DRAWINGS

FIG. 1 is a flowchart of tag random access triggered through paging in a conventional technology;
FIG. 2 is a diagram 1 of an architecture of a communication system according to an embodiment of this application;
FIG. 3 is a diagram 2 of an architecture of a communication system according to an embodiment of this application;
FIG. 4A is a diagram 3 of an architecture of a communication system according to an embodiment of this application;
FIG. 4B is a diagram 4 of an architecture of a communication system according to an embodiment of this application;
FIG. 4C is a diagram 5 of an architecture of a communication system according to an embodiment of this application;
FIG. 4D is a diagram 6 of an architecture of a communication system according to an embodiment of this application;
FIG. 5 is a diagram 1 of a structure of a communication apparatus according to an embodiment of this application;
FIG. 6 is a flowchart 1 of a communication method according to an embodiment of this application;
FIG. 7 is a flowchart 2 of a communication method according to an embodiment of this application;
FIG. 8 is a flowchart 3 of a communication method according to an embodiment of this application;
FIG. 9 is a diagram 1 of a structure of a second message according to an embodiment of this application;
FIG. 10 is a diagram 2 of a structure of a second message according to an embodiment of this application;
FIG. 11 is a flowchart 4 of a communication method according to an embodiment of this application;
FIG. 12 is a flowchart 5 of a communication method according to an embodiment of this application;
FIG. 13 is a flowchart 6 of a communication method according to an embodiment of this application; and
FIG. 14 is a diagram 2 of a structure of a communication apparatus according to an embodiment of this application.

### DESCRIPTION OF EMBODIMENTS

For ease of understanding technical solutions in embodiments of this application, the following first briefly describes technologies or terms related to this application.

### First: Features of an RFID tag

In embodiments of this application, the "RFID tag" may also be referred to as a "tag" or an "electronic tag". The tag may be a terminal device. The tag may include an active tag, a passive tag, and a semi-active tag. The passive tag may also be referred to as a passive internet of things (passive IoT) device.

In embodiments of this application, a reader/writer is a device that can read information in the tag, and the reader/writer can also write information into the tag. In other words, the reader/writer is a device that communicates with the tag. The reader/writer may be handheld or fixed. Specifically, the reader/writer may be a terminal device, a base station, an integrated access and backhaul (integrated access and backhaul, IAB) node, or another device having a read/write function.

At present, an RFID technology is mainly applied to identity identification, especially reading and writing of user data. The RFID tag has the following features:
1. An inventory rate of the RFID tag is an important performance indicator.
2. Application layer signaling and air interface signaling of the RFID tag are mixed together for design, in other words, a signaling design is more simplified.
3. The RFID tag supports microwatt-level or 100 microwatt-level power consumption, but does not support a complex circuit design.
4. When communicating with the RFID tag, the reader/writer can use a modulation manner of on-off keying (on-off keying, OOK). Because the OOK is an amplitude modulation manner, at a receiving end, that is, inside the RFID tag, source data may be recovered based on a magnitude of a level.
5. When communicating with a plurality of RFID tags, the reader/writer may use a time division multiplexing manner, and in this case, the plurality of RFID tags may read data in serial. Because a frequency division multiplexing or code division multiplexing manner cannot be used, parallel performance of the plurality of RFID tags is poor.
6. When the RFID tag works, energy needed is mainly from the reader/writer.

### Second: Existing RFID tag access procedure

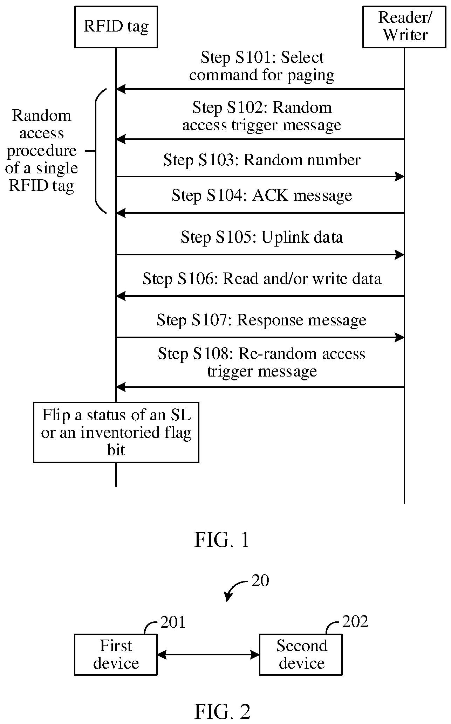

With reference to FIG. 1, the following describes an existing RFID tag access procedure by using interaction between an RFID tag and a reader/writer as an example.

Step S101: The reader/writer sends, to the RFID tag, a select (select) command for paging. Correspondingly, the RFID tag receives the select command from the reader/writer.

The select command includes memory information of the RFID tag, and the select command is used to select or page one or more RFID tags. Specifically, the reader/writer enables, by using the select command, an RFID tag that meets a select condition and/or an RFID tag that does not meet the select condition to perform status setting on a session (session) of an inventoried (inventoried) flag bit.

For example, the inventoried flag bit may have four sessions that are independent of each other: a session 0 (S0), a session 1 (S1), a session 2 (S2), and a session 3 (S3), and a status of each session may be a state A or a state B. That the reader/writer selects the session 1 for an RFID tag to perform status setting is used as an example. The reader/writer may enable, by using the select command, an RFID tag that meets the select condition to set a status of the session 1 from the state A to the state B, and enable an RFID tag that does not meet the select condition to set the status of the session 1 from the state B to the state A.

Fields included in the select command may be shown in the following Table 1. The command field may occupy 4 bits, and is specifically "1010", indicating that the command is the select command.

A target field may occupy 3 bits, and is used for the reader/writer to select the RFID tag to perform status setting on the inventoried flag bit or a selected flag (selected flag, SL). A status of the selected flag may be declared or non-declared, and is similar to the function of the foregoing session. Specifically, "000" represents the session 0 in the inventoried flag bit; "001" represents the session 1 in the inventoried flag bit; "010" represents the session 2 in the inventoried flag bit; "011" represents the session 3 in the inventoried flag bit; "100" represents the selected flag; and "101", "110", and "111" represent being reserved for future use (reserved for future use, RFU). In one inventoried process, a status of a session of an RFID tag that is already inventoried or the status of the selected flag may be flipped, so that the RFID tag that is already inventoried may not be inventoried again in this inventoried process.

An action field may occupy 3 bits, and is used to change the status of the SL or the inventoried flag bit. Specifically, Table 2 shows a correspondence between different values of the action field, actions performed by the RFID tag that meets the select condition, and actions performed by the RFID tag that does not meet the select condition. The status of the inventoried flag bit in Table 2 may be a status of the session corresponding to the target field in Table 1.

**Table 1**

| Field | Command (command) | Target (target) | Action (action) |
|---|---|---|---|
| Lengths of bits (# of bits) | 4 | 3 | 3 |
| Description (description) | 1010 | 000: Inventoried flag bit (S0) | Refer to Table 2 |
| | | 001: Inventoried flag bit (S1) | |
| | | 010: Inventoried flag bit (S2) | |
| | | 011: Inventoried flag bit (S3) | |
| | | 100: Selected flag | |
| | | 101: RFU | |
| | | 110: RFU | |
| | | 111: RFU | |

**Table 2**

| Description | Action performed by the RFID tag that meets the select condition | Action performed by the RFID tag that does not meet the select condition |
|---|---|---|
| 000 | Set the status of the SL to the declared state or set the status of the inventoried flag bit to the state A | Set the status of the SL to the non-declared state or set the status of the inventoried flag bit to the state B |
| 001 | Set the status of the SL to the declared state or set the status of the inventoried flag bit to the state A | No action |
| 010 | No action | Set the status of the SL to the non-declared state or set the status of the inventoried flag bit to the state B |
| 011 | Flip the status of the SL or the inventoried flag bit | No action |
| 100 | Set the status of the SL to the non-declared state or set the status of the inventoried flag bit to the state B | Set the status of the SL to the declared state or set the status of the inventoried flag bit to the state A |
| 101 | Set the status of the SL to the non-declared state or set the status of the inventoried flag bit to the state B | No action |
| 110 | No action | Set the status of the SL to the declared state or set the status of the inventoried flag bit to the state A |
| 111 | No action | Flip the status of the SL or the inventoried flag bit |

Although not shown in Table 1, the select command may further include the following fields: a memory bank (MemBank), a pointer (pointer), a length (length), and a mask (mask). These fields are used to select an RFID tag whose data in a specific memory bank is consistent with the mask, and it may be understood as that these fields define the foregoing select condition. In addition, the select command may further include a truncated field, and indicates the RFID tag to send a part of or an entire electronic product code (electronic product code, EPC) in the following step S105. In addition, the select command may further include a cyclic redundancy check (cyclic redundancy check, CRC) field, and the CRC field is used to detect or check an error that may occur in a transmission process of the select command.

Step S102: The reader/writer sends a random access trigger message to the RFID tag. Correspondingly, the RFID tag receives the random access trigger message from the reader/writer.

For example, the random access trigger message may be query (query) signaling.

The random access trigger message may include a status of a session in the inventoried flag bit, and indicates an RFID tag that matches or is consistent with the status of the session to initiate an access procedure. For example, the random access trigger message may include the state B of S1 in the inventoried flag bit, and indicates an RFID tag whose S1 status is the state B to initiate the access process. The random access trigger message may further include a value of a parameter Q, where the parameter Q is used by the RFID tag to calculate a slot range available for selection, and randomly select one slot to initiate the access procedure.

Step S103: The RFID tag sends a random number to the reader/writer. Correspondingly, the reader/writer receives the random number from the RFID tag.

The random number may be a 16-bit random number (random number 16, RN16). The following describes time for performing step S103. For an RFID tag that matches or is consistent with a status of a session in the random access trigger message, a slot for sending the RN16, that is, a slot for initiating the access procedure, needs to be determined. Specifically, the RFID tag may calculate, based on the value of the parameter Q in the random access trigger message, that the slot range available for selection is [0, 2^{Q}-1], and the RFID tag may randomly select one value from [0, 2^{Q}-1] and assign the value to a counter (counter). A count value of the counter decreases by 1 each time the RFID tag receives one piece of query repetition (QueryRep) signaling. When the count value of the counter is 0, step S103 may be performed. Particularly, because a slot corresponding to step S102 is 0 in the slot range [0, 2^{Q}-1], an RFID tag that selects 0 in [0, 2^{Q}-1] may send a random number to the reader/writer immediately after receiving the random access trigger message.

Step S104: When the reader/writer successfully receives the random number from the RFID tag, the reader/writer sends an acknowledgment (acknowledge, ACK) message to the RFID tag. Correspondingly, the RFID tag receives the ACK message from the reader/writer.

The ACK message indicates that random access of the RFID tag the reader/writer succeeds. The ACK message may include the random number received by the reader/writer from the RFID tag in step S103.

At this point, a random access procedure of a single RFID tag ends.

Step S105: The RFID tag sends uplink (uplink, UL) data and/or signaling to the reader/writer. Correspondingly, the reader/writer receives the uplink data from the RFID tag.

The uplink data may be, for example, an EPC.

Step S106: The reader/writer reads data in the RFID tag, and/or, the reader/writer writes data into the RFID tag.

Step S107: For a read and/or write operation of the reader/writer, the RFID tag sends a response message to the reader/writer. Correspondingly, the reader/writer receives the response message from the RFID tag.

The response message may indicate that the read and/or write operation of the reader/writer succeeds or fails.

Step S108: The reader/writer sends a re-random access trigger message to the RFID tag. Correspondingly, the RFID tag receives the re-random access trigger message from the reader/writer.

After receiving the re-random access trigger message, the RFID tag may flip the status of the SL or the inventoried flag bit. For example, the status of the session 1 is set from the state B to the state A.

For example, the re-random access trigger message may be the query repetition signaling. The query repetition signaling may be used to trigger, to access the reader/writer, an RFID tag that has not been successfully accessed. Specifically, a count value corresponding to an RFID tag whose count value of the counter is not 0 is decreased by 1, and when the count value of the counter is 0, steps S103 to S108 are repeatedly performed until all RFID tags successfully access the reader/writer.

The following describes the technical solutions in embodiments of this application with reference to the accompanying drawings in embodiments of this application. In descriptions of this application, unless otherwise specified, "/" represents an "or" relationship between associated objects. For example, A/B may represent A or B. In this application, "and/or" describes only an association relationship for describing associated objects and represents that three relationships may exist. For example, A and/or B may represent the following three cases: Only A exists, both A and B exist, and only B exists, where A or B may be singular or plural. In addition, in the descriptions of this application, "a plurality of" means two or more than two unless otherwise specified. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that have basically same functions and purposes. A person skilled in the art may understand that the terms such as "first" and "second" do not limit a quantity and an execution sequence, and the terms such as "first" and "second" do not indicate a definite difference.

FIG. 2 shows a communication system 20 according to an embodiment of this application. The communication system 20 includes a first device 201 and a second device 202. The first device 201 is configured to send configuration information to the second device 202, where the configuration information is used by the second device 202 to determine a first time domain resource for sending a first message when transmission of MO service data and/or signaling needs to be performed, and the first message is used by the second device 202 to request to access the first device 201. The second device 202 is configured to receive the configuration information from the first device 201. The second device 202 is further configured to: when the transmission of the MO service data and/or signaling needs to be performed, send the first message to the first device 201 on the first time domain resource. The first device 201 is further configured to: when failing to receive the first message from the second device 202 on the first time domain resource, send a second message to the second device 202, where the second message indicates the second device 202 to access the first device 201 again. The second device 202 is further configured to: when the first device 201 fails to receive the first message from the second device 202 on the first time domain resource, receive the second message from the first device 201. Specific implementation and technical effects of the solution are described in detail in subsequent method embodiments, and details are not described herein again.

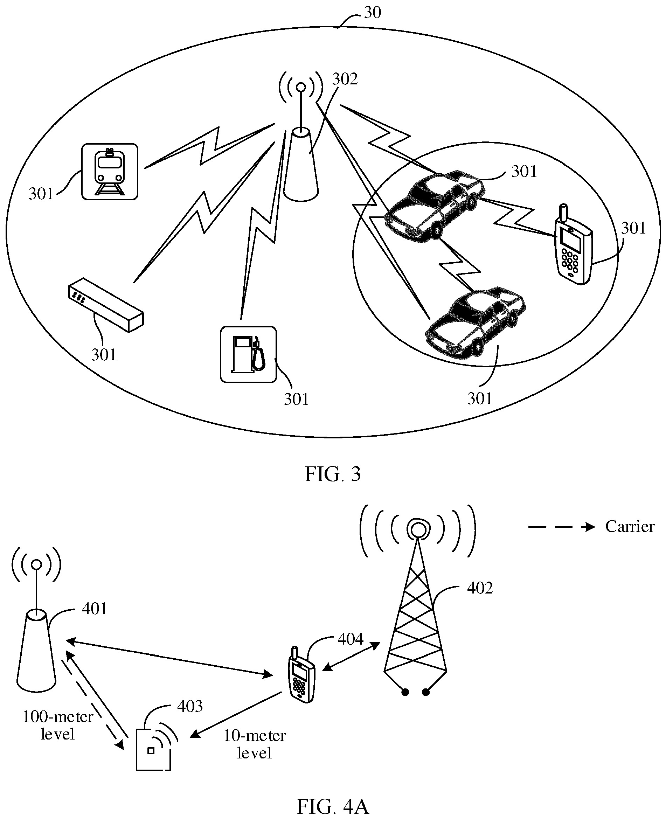

FIG. 3 shows another communication system 30 according to an embodiment of this application. The communication system 30 includes a network device 302 and one or more terminal devices 301 connected to the network device 302. The terminal device 301 is connected to the network device 302 in a wireless manner. Optionally, different terminal devices 301 may communicate with each other. The terminal device 301 may be at a fixed location, or may be movable.

It should be noted that FIG. 3 is merely a diagram. Although not shown, the communication system 30 may further include another network device. For example, the communication system 30 may further include one or more of a core network device, a wireless relay device, and a wireless backhaul device. This is not specifically limited herein. The network device may be connected to the core network device in a wireless or wired manner. The core network device and the network device 302 may be different independent physical devices, or functions of the core network device and logical functions of the network device 302 may be integrated into a same physical device, or a part of functions of the core network device and a part of functions of the network device 302 may be integrated into one physical device. This is not specifically limited in this embodiment of this application.

Optionally, the network device 132 in this embodiment of this application is a device for connecting the terminal device 131 to a wireless network, and may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a base station in a future mobile communication system, an access node in a wireless-fidelity (wireless-fidelity, Wi-Fi) system, or the like; or may be a module or a unit that implements some functions of a base station, for example, may be a central unit (central unit, CU), or may be a distributed unit (distributed unit, DU). A specific technology and a specific device form that are used by the network device are not limited in this embodiment of this application. In this application, unless otherwise specified, the network device is a radio access network device.

Optionally, the terminal device 131 in this embodiment of this application may be a device configured to implement a wireless communication function, for example, a terminal or a chip that can be used in a terminal. The terminal may be user equipment (user equipment, UE), an access terminal, a terminal unit, a terminal station, a mobile station, a remote station, a remote terminal, a mobile device, a wireless communication device, a terminal agent, a terminal apparatus, or the like in a 5G network or a future evolved public land mobile network (public land mobile network, PLMN). The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having the wireless communication function, another processing device connected to a wireless modem, a vehicle-mounted device, a wearable device, a virtual reality (virtual reality, VR) terminal apparatus, an augmented reality (augmented reality, AR) terminal apparatus, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in smart home (smart home), or the like. The terminal device 131 may be at a fixed location, or may be movable. This is not specifically limited in this embodiment of this application.

Optionally, in this embodiment of this application, the terminal device 131 includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). An operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of the method provided in embodiments of this application is not specifically limited in embodiments of this application, provided that communication can be performed according to the method provided in embodiments of this application by running a program that records code of the method provided in embodiments of this application. For example, the execution body of the method provided in embodiments of this application may be the terminal device 131 or a function module that can invoke a program and execute the program in the terminal device 131. Alternatively, the execution body of the method provided in embodiments of this application may be the network device 132 or a function module that can invoke a program and execute the program in the network device 132.

In other words, related functions of the terminal device 131 or the network device 132 in embodiments of this application may be implemented by one device, or may be jointly implemented by a plurality of devices, or may be implemented by one or more function modules in one device. This is not specifically limited in embodiments of this application. It may be understood that the foregoing function may be a network element in a hardware device, a software function running on dedicated hardware, a combination of hardware and software, or a virtualized function instantiated on a platform (for example, a cloud platform).

Embodiments of this application are applicable to a 5G new radio (new radio, NR) system, and are also applicable to a 3rd generation partnership project (3rd generation partnership project, 3GPP) long term evolution (long term evolution, LTE) technology, a universal mobile telecommunications system (universal mobile telecommunications system, UMTS), a code division multiple access (code division multiple access, CDMA) system, a wireless local area network (wireless local area network, WLAN) or a passive internet of things (passive IoT), a semi-passive internet of things, an internet of things of an active tag or a backscatter (backscatter) technology, or a future wireless communication system. Embodiment of this application imposes no limitation on a communication system to which the communication method provided in embodiments of this application is applicable.

For example, the communication method provided in embodiments of this application may be applied to an ultra-low power consumption communication scenario, for example, a communication scenario in which power consumption is below a milliwatt level or at a microwatt level or a 100 microwatt level. For example, the communication method may be applied to an RFID scenario or an X-IoT (X may be a passive or semi-passive internet of things) scenario.

With reference to FIG. 2, for example, the first device 201 in FIG. 2 may be the network device 302 in FIG. 3, for example, a micro base station (micro BS), and the second device 202 in FIG. 2 may be any terminal device 301 in FIG. 3. A distance between the terminal device 301 and the network device 302 may be at a 100-meter level. The network device 302 may communicate with the terminal device 301 through a uu interface, that is, air-interface communication. In an application scenario of an RFID technology, the network device 302 may be a reader/writer, and the terminal device 301 may be a tag or an RFID tag.

With reference to FIG. 2, for example, the first device 201 in FIG. 2 may be any terminal device 301 in FIG. 3, that is, a first terminal device, and the second device 202 in FIG. 2 may be a terminal device 301 in FIG. 3 other than the first terminal device, that is, a second terminal device. A distance between the first terminal device and the second terminal device may be at a 10-meter level, and the first terminal device may communicate with the second terminal device through a sidelink interface, that is, sidelink communication. In the application scenario of the RFID technology, the first terminal device may be a reader/writer, and the second terminal device may be a tag or an RFID tag.

With reference to FIG. 2, for example, the first device 201 in FIG. 2 may be an IAB node. This is not shown in FIG. 3. The second device 202 in FIG. 2 may be any terminal device 301 in FIG. 3. A distance between the terminal device 301 and the IAB node may be at the 100-meter level, and the IAB node may communicate with the terminal device 301 through the uu interface. The IAB node may further communicate with the network device 302 in FIG. 3, for example, a macro base station (macro BS), through the uu interface or an F1 interface. In the application scenario of the RFID technology, the IAB node may be a reader/writer, and the terminal device 301 may be a tag or an RFID tag.

FIG. 4A shows still another communication system according to an embodiment of this application. The communication system includes a first base station 401, a second base station 402, a tag 403, and UE 404. A distance between the tag 403 and the first base station 401 may be at a 100-meter level, and a distance between the tag 403 and the UE 404 may be at a 10-meter level. The first base station 401 may communicate with the UE 404 through a uu port, and the second base station 402 may communicate with the UE 404 through the uu port.

In FIG. 4A, only downlink information transmission exists between the tag 403 and the UE 404. In this case, the UE 404 may be considered as an excitation source. The excitation source may also be referred to as an auxiliary device, and the excitation source may be a terminal device, a base station, or a small cell. Only the downlink information transmission is performed between the excitation source and the tag, and uplink or downlink information transmission may be performed between the excitation source and a reader/writer through an air interface or a wired connection. Only uplink transmission is performed between the tag 403 and the first base station 401, and a dashed line indicates that the first base station 401 may provide a carrier or energy to the tag 403. In other words, only the uplink information transmission is performed between the tag 403 and the first base station 401, and only the downlink information transmission is performed between the tag 403 and the UE 404. The first base station 401 may be considered as the reader/writer.

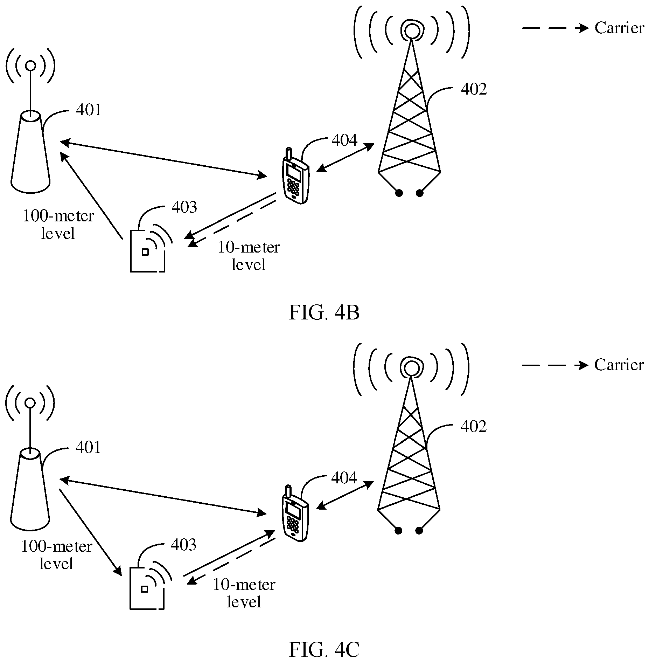

Similarly, the communication system shown in FIG. 4B also includes a first base station 401, a second base station 402, a tag 403, and UE 404. A distance between the tag 403 and the first base station 401 may be at a 100-meter level, and a distance between the tag 403 and the UE 404 may be at a 10-meter level. The first base station 401 may communicate with the UE 404 through a uu port, and the second base station 402 may communicate with the UE 404 through the uu port.

In FIG. 4B, only uplink information transmission exists between the tag 403 and the first base station 401. Only downlink information transmission exists between the tag 403 and the UE 404. A dashed line indicates that the UE 404 may provide a carrier or energy to the tag 403. The first base station 401 may be considered as a reader/writer, and the UE 404 may be considered as an excitation source.

The architectures of the communication systems shown in FIG. 4A and FIG. 4B may be referred to as a downlink UE-assisted separated architecture.

Similarly, the communication system shown in FIG. 4C also includes a first base station 401, a second base station 402, a tag 403, and UE 404. A distance between the tag 403 and the first base station 401 may be at a 100-meter level, and a distance between the tag 403 and the UE 404 may be at a 10-meter level. The first base station 401 may communicate with the UE 404 through a uu port, and the second base station 402 may communicate with the UE 404 through the uu port.

In FIG. 4C, only downlink information transmission exists between the tag 403 and the first base station 401. Only uplink information transmission exists between the tag 403 and the UE 404. A dashed line indicates that the UE 404 may provide a carrier or energy to the tag 403. The first base station 401 may be considered as a reader/writer.

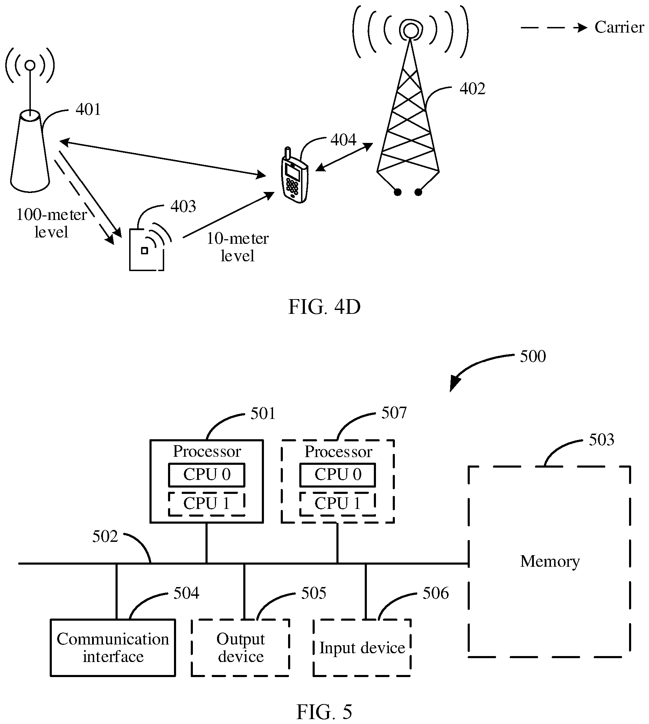

Similarly, the communication system shown in FIG. 4D also includes a first base station 401, a second base station 402, a tag 403, and UE 404. A distance between the tag 403 and the first base station 401 may be at a 100-meter level, and a distance between the tag 403 and the UE 404 may be at a 10-meter level. The first base station 401 may communicate with the UE 404 through a uu port, and the second base station 402 may communicate with the UE 404 through the uu port.

In FIG. 4D, only downlink information transmission exists between the tag 403 and the first base station 401. Only uplink information transmission exists between the tag 403 and the UE 404. A dashed line indicates that the first base station 401 may provide a carrier or energy to the tag 403. In this case, the first base station 401 may be considered as a reader/writer.

The architectures of the communication systems shown in FIG. 4C and FIG. 4D may be referred to as an uplink UE-assisted separated architecture.

With reference to FIG. 2, for example, the first device 201 in FIG. 2 may be the first base station 401 in FIG. 4A, FIG. 4B, FIG. 4C, or FIG. 4D, and the second device 202 in FIG. 2 may be the tag 403 in FIG. 4A, FIG. 4B, FIG. 4C, or FIG. 4D.

Optionally, related functions of the first device or the second device in embodiments of this application may be implemented by one device, may be jointly implemented by a plurality of devices, or may be implemented by one or more function modules in one device. This is not specifically limited in embodiments of this application. It may be understood that the foregoing function may be a network element in a hardware device, a software function running on dedicated hardware, a combination of hardware and software, or a virtualized function instantiated on a platform (for example, a cloud platform).

For example, the related functions of the first device or the second device in this embodiment of this application may be implemented by a communication apparatus 500 in FIG. 5.

FIG. 5 is a diagram of a structure of the communication apparatus 500 according to an embodiment of this application. The communication apparatus 500 includes one or more processors 501, a communication line 502, and at least one communication interface (FIG. 5 uses only an example in which a communication interface 504 and one processor 501 are included for description). Optionally, the communication apparatus 500 may further include a memory 503.

The processor 501 may be a CPU, a microprocessor, an application-specific integrated circuit (application-specific integrated circuit, ASIC), or one or more integrated circuits configured to control program execution of the solutions of this application.

The communication line 502 may include a path for connecting different components.

The communication interface 504 may be a transceiver module, configured to communicate with another device or a communication network, for example, Ethernet, a RAN, or a WLAN. For example, the transceiver module may be an apparatus like a transceiver or a transceiver machine. Optionally, the communication interface 504 may alternatively be a transceiver circuit located in the processor 501, and is configured to implement signal input and signal output of the processor.

The memory 503 may be an apparatus having a storage function. For example, the memory 503 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray optical disc, and the like), a magnetic disk storage medium or another magnetic storage device, or any other medium that can be configured to carry or store expected program code in a form of instructions or a data structure and that can be accessed by a computer. However, the memory is not limited thereto. The memory may exist independently and is connected to the processor through the communication line 502. Alternatively, the memory may be integrated with the processor.

The memory 503 is configured to store computer-executable instructions for performing the solutions in this application, and the processor 501 controls execution of the computer-executable instructions. The processor 501 is configured to execute the computer-executable instructions stored in the memory 503, to implement the communication method provided in embodiments of this application.

Alternatively, in embodiments of this application, the processor 501 may implement a processing-related function in the communication method provided in the following embodiments of this application, and the communication interface 504 may be responsible for communicating with another device or communication network. This is not specifically limited in embodiments of this application.

The computer-executable instructions in embodiments of this application may also be referred to as application program code. This is not specifically limited in embodiments of this application.

During specific implementation, in an embodiment, the processor 501 may include one or more CPUs, for example, a CPU 0 and a CPU 1 in FIG. 5.

During specific implementation, in an embodiment, the communication apparatus 500 may include a plurality of processors, for example, the processor 501 and a processor 507 in FIG. 5. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the communication apparatus 500 may further include an output device 505 and an input device 506. The output device 505 communicates with the processor 501, and may display information in a plurality of manners.

The communication apparatus 500 may be a general-purpose apparatus or a dedicated apparatus. For example, the communication apparatus 500 may be a desktop computer, a portable computer, a network server, a palmtop computer (personal digital assistant, PDA), a mobile phone, a tablet computer, a wireless terminal apparatus, an in-vehicle terminal apparatus, an embedded device, or a device having a structure similar to that in FIG. 5. A type of the communication apparatus 500 is not limited in embodiments of this application.

The following describes in detail a communication method provided in embodiments of this application with reference to FIG. 1 to FIG. 5.

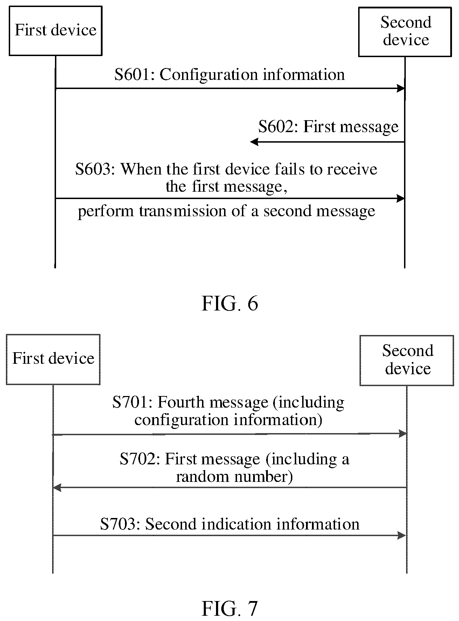

FIG. 6 shows a communication method according to an embodiment of this application. The communication method includes the following steps.

Step S601: A first device sends configuration information to a second device, and correspondingly, the second device receives the configuration information from the first device. The configuration information is used by the second device to determine a first time domain resource and/or a first frequency domain resource for sending a first message when the second device actively initiates access, and the first message is used by the second device to request to access the first device.

As described above, the first device in this embodiment of this application may be a network device, and the second device may be a terminal device; the first device in this embodiment of this application may be a terminal device, and the second device may be another terminal device different from the first device; or the first device in this embodiment of this application may be an IAB node, and the second device may be a terminal device. This is not limited in this embodiment of this application. In an application scenario of an RFID technology, the first terminal device may be referred to as a reader/writer, and the second terminal device may be referred to as a tag or an RFID tag.

For example, the configuration information may be carried in a beacon (beacon) signal or a system message, and is periodically sent by the first device; or the configuration information may be carried in a select command or another paging (paging) command, and is periodically or aperiodically sent by the first device.

Step S602: When actively initiating the access, the second device sends the first message to the first device on the first time domain resource and/or the first frequency domain.

In this embodiment of this application, "when the second device actively initiates access" may be understood as "when the second device needs to perform transmission of MO service data and/or signaling". The meaning of "a device actively performs access" is the same as that of MO, in other words, before step S602, the second device does not receive a downlink access trigger message similar to that in step S102. The meaning of "a paged device performs access" is the same as that of "MT", in other words, the access initiated by the device is triggered by the downlink access trigger message similar to that in step S102, or it may be understood as that the downlink trigger message includes information about the device, so that the device is caused to perform the access, instead of actively initiating the access. Unified descriptions are provided herein and details are not described below again.

Optionally, the first message includes a random number. The communication method provided in this embodiment of this application further includes: The first device sends a fourth message to the second device, and correspondingly, the second device receives the fourth message from the first device. The fourth message includes third indication information indicating to use two-step random access, or the fourth message includes configuration information corresponding to two-step random access. In this solution, the first device may notify the second device to initiate the access by using a two-step random access procedure, so that the access procedure of the second device can be effectively simplified.

For example, the fourth message may be a beacon signal, a system message, a select command, or another paging command. In other words, the fourth message may further include the configuration information in step S601.

For example, the random number included in the first message may be a 16-bit random number (RN16). A length of the random number may be specified by the first device, and is carried in the configuration information in step S601.

In this embodiment of this application, the third indication information may explicitly indicate that the two-step random access is used, and if the configuration information corresponding to the two-step random access exists, the configuration information may implicitly indicate that the two-step random access is used. In this case, the two-step random access may be used regardless of a scenario in which the device actively performs access or a scenario in which the paged device performs access.

Optionally, when successfully receiving the first message from the second device on the first time domain resource and/or the first frequency domain resource, the first device sends second indication information to the second device. Correspondingly, the second device receives the second indication information from the first device, where the second indication information indicates that the second device succeeds in the access. The successful access herein indicates that an association relationship is established between the first device and the second device. After completing the access, the second device may perform transmission of data and/or signaling with the first device.

Optionally, the second indication information may include the random number included in the first message.

Optionally, step S602 may alternatively not be performed when the second device actively initiates the access, but may be performed when the second device receives a paging message or the downlink trigger message.

FIG. 7 shows an example procedure in which a second device actively initiates two-step random access and succeeds in the access. The procedure specifically includes the following steps.

Step S701: A first device sends a fourth message to a second device, and correspondingly, the second device receives the fourth message from the first device.

For example, the fourth message may be a beacon signal, a system message, a select command, a paging command, or other downlink signaling that triggers terminal access. In addition to third indication information or configuration information corresponding to two-step random access, the fourth message may further include the configuration information in step S601. The configuration information is used by the second device to determine a first time domain resource and/or a first frequency domain resource for sending a first message when the second device actively initiates access, and the first message is used by the second device to request to access the first device.

In this embodiment of this application, transmission of the fourth message may be performed before the second device sends the first message. Optionally, step S701 may alternatively be performed when the second device receives a paging message or a downlink trigger message.

When the second device actively initiates the access, or when the second device receives the paging message or the downlink trigger message, the following step S702 and step S703 are performed.

Step S702: The second device sends, on the first time domain resource and/or the first frequency domain, the first message including a random number to the first device, and correspondingly, the first device receives, on the first time domain resource and/or the first frequency domain, the first message including the random number from the second device. For example, the first message may include an RN 16.

Step S703: The first device sends second indication information to the second device, and correspondingly, the second device receives the second indication information from the first device.

For example, the second indication information may be a contention resolution (contention resolution) message or a response message. The contention resolution message or the response message may include the RN 16 in step S702.

Optionally, the first message includes a preamble or a random number. The communication method provided in this embodiment of this application further includes: The first device sends a fifth message to the second device, where the fifth message includes fourth indication information indicating to use four-step random access, or the fifth message includes configuration information corresponding to four-step random access.

For example, the fifth message may be a beacon signal, a system message, a select command, or another paging command. In other words, the fifth message may further include the configuration information in step S601.

In this embodiment of this application, the fourth indication information may explicitly indicate that the four-step random access is used, and the configuration information corresponding to the four-step random access may implicitly indicate that the four-step random access is used. In this case, the four-step random access may be used regardless of a scenario in which a device actively performs access or a scenario in which a paged device performs access.

In this embodiment of this application, transmission of the fifth message may be performed before the second device sends the first message.

A technical effect of the embodiment shown in FIG. 7 is as follows: An access procedure performed when the second device actively initiates the access is consistent with a procedure performed when the second device receives the paging message or the downlink trigger message, so that introduction of complex determining logic can be avoided, or implementation of a multi-branch procedure can be avoided, to simplify the access procedure of the second device.

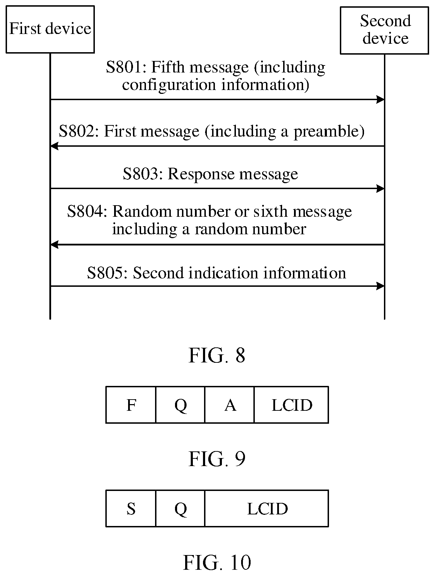

FIG. 8 shows an example procedure in which a second device initiates four-step random access and the access succeeds. The procedure specifically includes the following steps.

Step S801: A first device sends a fifth message to the second device, and correspondingly, the second device receives the fifth message from the first device.

For example, the fifth message may be a beacon signal, a system message, a select command, or another paging command. In addition to fourth indication information or configuration information corresponding to the four-step random access, the fifth message may further include the configuration information in step S601. The configuration information is used by the second device to determine a first time domain resource and/or a first frequency domain resource for sending a first message when the second device actively initiates access, and the first message is used by the second device to request to access the first device. Optionally, step S801 may alternatively be performed when the second device receives a paging message or a downlink trigger message.

When the second device actively initiates the access, or when the second device receives the paging message or the downlink trigger message, the following step S802 to step S805 are performed.

Step S802: The second device sends, on the first time domain resource and/or the first frequency domain, the first message including a preamble to the first device, and correspondingly, the first device receives, on the first time domain resource and/or the first frequency domain, the first message including the preamble from the second device.

For example, the first message may include a preamble whose length is 8 bits. The fifth message may indicate a bit length of the preamble in the first message.

Step S803: The first device sends a response message to the second device, and correspondingly, the second device receives the response message from the first device.

Optionally, the response message may include the preamble or an index of the preamble in step S802.

Step S804: The second device sends a random number or a sixth message including a random number to the first device, and correspondingly, the first device receives the random number or the sixth message including the random number from the second device.

For example, the sixth message including the random number may be a message 3 (msg3) including the random number.

For example, a length of the random number in step S804 may be greater than or equal to the length of the preamble in step S802. For example, the length of the random number in step S804 may be 8 bits or 16 bits. The length of the random number in step S804 may be specified by the first device, and is carried in the configuration information included in the fifth message in step S801.

Step S805: The first device sends second indication information to the second device, and correspondingly, the second device receives the second indication information from the first device.

For example, the second indication information may be a contention resolution message or a response message. The contention resolution message or the response message may include the random number in step S804.

A technical effect of the embodiment shown in FIG. 8 is as follows: An access procedure performed when the second device actively initiates the access is consistent with a procedure performed when the second device receives the paging message or the downlink trigger message, so that introduction of complex determining logic can be avoided, or implementation of a multi-branch procedure can be avoided, to simplify the access procedure of the second device.

Step S603: When the first device fails to receive the first message from the second device on the first time domain resource and/or the first frequency domain resource, the first device sends a second message to the second device, and correspondingly, the second device receives the second message from the first device. The second message indicates the second device to access the first device again.

In the communication method provided in this embodiment of this application, the second device determines to send the first message to the first device when actively initiating the access, to request to access the first device. In other words, the access procedure is actively initiated by the second device. When the second device needs to perform transmission of uplink data and/or signaling, the second device can trigger the access procedure without waiting for paging of the first device. Therefore, the second device can send the uplink data and/or signaling to the first device in time. In addition, when failing to receive the first message, the first device indicates, by using the second message, the second device to access the first device again, so that a success rate of accessing the first device by the second device can be increased, to ensure the transmission of the uplink data and/or the signaling.

In this embodiment of this application, that the first device fails to receive the first message may be understood as that the first device receives the first message but incorrectly decodes the first message, or detects that a collision occurs when a plurality of terminals send the first message.

Step S603 may be performed when the first device determines that a device fails to access the first device, or may be performed when the first device determines that a plurality of devices complete access or a plurality of devices fail to access the first device. An execution moment of step S603 is not limited in this embodiment of this application.

Optionally, the second message includes first indication information and/or the first time domain resource and/or the first frequency domain resource. The first indication information and/or the first time domain resource and/or the first frequency domain resource indicate/indicates, to access the first device again, the second device that previously attempts to access the first device on the first time domain resource and/or the first frequency domain resource but fails. In this solution, the first device fails to receive the first message. In other words, the second device fails the access. The second message may include the first time domain resource and/or the first frequency domain resource, and may indicate the second device that fails to access the first device on the first time domain resource and/or the first frequency domain resource to access the first device again. The first time domain resource may be a slot number, a slot range, a frame number, or a frame range, or the first time domain resource indicates an access occasion with a specific ordinal number in time, for example, a random access channel occasion (random access channel occasion, RACH occasion, RO). The first frequency domain resource may be a frequency index value, and may be specifically an RB index, or an index of a frequency unit in an RB, for example, a subcarrier index.

For example, the second message may be added signaling, for example, medium access control (medium access control, MAC) control element (control element, CE) signaling or radio resource control (radio resource control, RRC) signaling. For example, the second message may be added query failure (queryFailure) signaling.

For example, a field may be added to existing signaling or added signaling to carry the first indication information. As shown in FIG. 9, a field, for example, a field F, may be added to query MAC CE (query MAC CE) signaling, and is used to carry the first indication information, to indicate the second device to access the first device again. The second message may be query MAC CE signaling obtained by newly adding the F field.

Optionally, the second message shown in FIG. 9 may further include a configuration time domain resource field, for example, at least one of Q, an inventoried flag bit status field, or a logical channel identifier (logical channel identity, LCID) field. The Q field may carry the parameter Q mentioned in the previous part, and is used by an RFID tag to recalculate a slot range available for selection, and randomly select one slot to initiate an access procedure again. "A" may represent a state A of a session in the inventoried flag bit mentioned in the previous part. The LCID field is used to identify a type or a usage of the MAC CE. "A" in FIG. 9 may alternatively be "B", indicating a state B of a session in the inventoried flag bit mentioned in the previous part.

Optionally, if the second message further includes a field used for an inventoried device, that is, a flag bit used to trigger terminal access over the downlink, for example, the inventoried flag bit, existence of the field may be ignored.

For example, one field may be added to the existing signaling, and the field carries the first time domain resource and/or the first frequency domain resource. As shown in FIG. 10, a field, for example, an S field, may be added to query slot (querySlot) signaling, and is used to carry a slot, to indicate a device that fails the access in the slot to perform access again. The second message may be query slot signaling obtained by newly adding the S field. If the S field carries a slot 2, and a device 1 and a device 2 fail to perform access in the slot 2, the slot 2 in the query slot signaling indicates the device that fails the access in the slot 2 to perform access again. After receiving the query slot signaling, the device 1 and the device 2 initiate an access procedure again. For example, a field, for example, an F field, is added to carry a frequency domain resource, to indicate a device that fails the access on the frequency domain resource to perform access again. F may be specifically a frequency index.

In another possible implementation, the signaling shown in FIG. 10 may further include a first information field, and a value of the field may be a first value or a second value. The signaling shown in FIG. 10 may indicate, to perform access, a device that attempts to perform access on the first time domain resource and/or the first frequency domain resource and whose value of the first information field is the first value or the second value, or may indicate a device that fails the access on the resource to perform access again. When a second device succeeds in the access and completes data transmission, the value of the first information field may change from the first value to the second value, or change from the second value to the first value. In other words, based on a flip situation of first resource information and the first information, a device may be selected for access.

Optionally, the second message shown in FIG. 10 may further include a Q field and/or an LCID field. The Q field may carry the parameter Q mentioned in the previous part, and is used by an RFID tag to recalculate a slot range available for selection, and randomly select one slot to initiate an access procedure again. The LCID field is used to identify a type or a usage of the MAC CE.

Optionally, the second message is further used by the second device to determine a second time domain resource and/or a second frequency domain resource for sending a third message, and the third message is used by the second device to request again to access a first device. In this solution, the second message may be further used to determine the second time domain resource and/or the second frequency domain resource, so that the second device can send the third message on the new resource, to initiate the access procedure again.

Optionally, the signaling shown in FIG. 10 may alternatively not include the Q field, and in this case, the second device may use a default quantity of time domain resources that are allocated by the first device and that are used for access, for example, a quantity of slots. Optionally, the signaling shown in FIG. 10 may further include a quantity of levels, indicating a tag that fails the access on a resource at a level to perform access again. The levels herein may be in one-to-one correspondence with a quantity of collisions or failures of a terminal. For example, the quantities are the same (the quantity of collisions is the same as the quantity of levels), or a difference is 1.

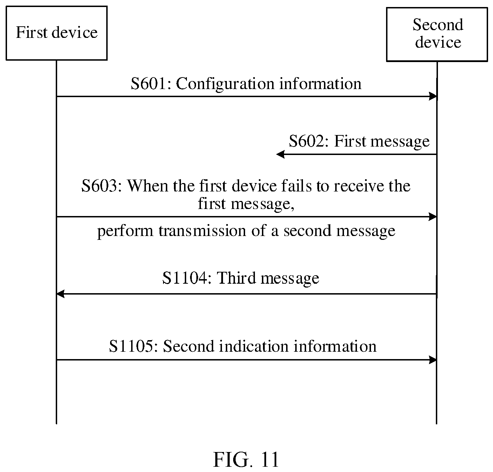

FIG. 11 is a flowchart in which a second device initiates access again and completes the access after first access fails. For related descriptions of step S601 to step S603, refer to the embodiment shown in FIG. 6. Details are not described herein again. The embodiment shown in FIG. 11 further includes the following steps.

Step S1104: The second device sends a third message to a first device on a second time domain resource and/or a second frequency domain resource, and correspondingly, the first device receives the third message from the second device on the second time domain resource and/or the second frequency domain resource.

The third message is used by the second device to request again to access the first device.

Step S1105: The first device sends second indication information to the second device, and correspondingly, the second device receives the second indication information from the first device.

For example, the second indication information may be a contention resolution message or a response message.

For two-step random access, step S601 in FIG. 11 may be replaced with step S701 in FIG. 7. Both a first message and the third message may be random numbers, and the second indication information may include the random number carried in the third message. The first device fails to receive the first message from the second device, but after sending, to the second device, the second message indicating the second device to access the first device again, the first device successfully receives the third message from the second device.

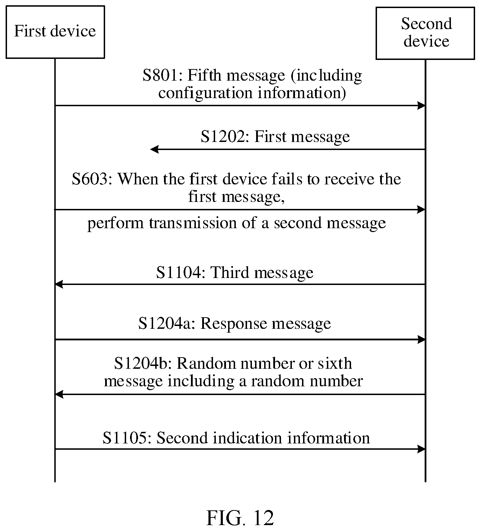

For four-step random access, as shown in FIG. 12, for specific descriptions of step S801, refer to the embodiment shown in FIG. 8. A first message may be a preamble, a random number, or a sixth message including a random number. When the first message is the random number or the sixth message including the random number, after step S801 is performed and before step S1202 is performed, the method may further include the following steps that are not shown.

Step S1201a: When a second device actively initiates access, the second device sends the preamble to a first device on a first time domain resource and/or a first frequency domain, and correspondingly, the first device receives the preamble from the second device on the first time domain resource and/or the first frequency domain.

For example, a length of the preamble may be less than a length of the random number included in the first message. For example, the length of the preamble is 8 bits, and the length of the random number included in the first message is 8 bits or 16 bits. The length of the random number included in the first message may be specified by the first device, and is carried in configuration information included in the fifth message in step S801. In this way, overheads of an access procedure can be reduced as much as possible.

Step S1201b: The first device sends a response message to the second device, and correspondingly, the second device receives the response message from the first device.

Optionally, the response message may include the preamble or an index of the preamble in step S1201a.

In FIG. 12, for specific descriptions of step S603, refer to the embodiment shown in FIG. 6. A third message may be a preamble or a random number.

In a possible implementation, the third message is the preamble, and a length of the preamble may be, for example, 8 bits. After step S1104 is performed, the method may further include:
Step S1204a: The first device sends the response message to the second device, and correspondingly, the second device receives the response message from the first device.

Optionally, the response message may include the preamble or an index of the preamble carried in the third message in step S1104.

Step S1204b: The second device sends the random number or the sixth message including the random number to the first device, and correspondingly, the first device receives the random number or the sixth message including the random number from the second device.

For example, the sixth message including the random number may be a message 3 including the random number.

For example, a length of the random number in step S1204b may be greater than or equal to the length of the preamble carried in the third message in step S1104. For example, the length of the random number in step S1204b may be 8 bits or 16 bits. The length of the random number in step S1204b may be specified by the first device, and is carried in the configuration message in step S801.

Step S1105: The first device sends second indication information to the second device, and correspondingly, the second device receives the second indication information from the first device.

For example, the second indication information may be a contention resolution message or a response message.

In another possible implementation, the third message is the random number or the sixth message including the random number. In other words, transmission of the third message may be transmission of the random number or the sixth message including the random number in step S1204b. After step S603 and before the transmission of the third message, a step of transmission of the preamble and a response message in response to the preamble is still included.

Optionally, that the second message indicates the second device to access the first device again includes: The second message indicates the second device whose first information is a first value to access the first device again. A value of the first information of a device that actively initiates access and that fails the access is the first value; and a value of the first information of a device that actively initiates access and succeeds in the access or a value of the first information of a device that does not actively initiate access is a second value. In this solution, the second message indicates the second device whose first information is the first value to access the first device again. If a device whose first information is the second value receives the second message, the device does not initiate the access procedure. Therefore, this solution does not affect communication of the device whose first information is the second value. In other words, this solution does not cause the device whose first information is the second value to access the first device.

For example, the first information may be a flag bit or a status. The first value may be a state B, and the second value may be a state A. The second message may include the first value, for example, the state B, indicating a device whose flag bit is the state B to access the first device again. Specifically, the state A may be represented by using a bit "0", and the state B may be represented by using a bit "1"; or the state A may be represented by using a bit "1", and the state B may be represented by using a bit "0".

Optionally, after the second device receives fifth indication information from the first device, the communication method provided in this embodiment of this application further includes: The second device changes the first information from the first value to the second value, in other words, after the second device receives the fifth indication information, it indicates that the second device completes data transmission, and the second device may change the first information from the first value to the second value. The value of the first information of the device that actively initiates the access and fails the access is the first value, or a value of the first information of a device that needs to actively initiate the access is the first value; and the value of the first information of the device that actively initiates the access and succeeds in the access or the value of the first information of the device that does not actively initiate the access is the second value. The fifth indication information may be a QueryRep MAC CE, an RRC release message, or another MAC CE or RRC signaling. The fifth indication information may alternatively be the second indication information.

For example, after step S703 in FIG. 7, after step S805 in FIG. 8, after step S1105 in FIG. 11, after step S1105 in FIG. 12, or after the second device receives the fifth indication information, the second device may change the first information from the first value to the second value. In this case, the second message in FIG. 7, FIG. 8, FIG. 11, or FIG. 12 indicates the second device whose first information is the first value to access the first device again.

Optionally, before the second device sends the first message to the first device on the first time domain resource and/or the first frequency domain resource, when the second device sends the first message to the first device on the first time domain resource and/or the first frequency domain resource, or after the second device sends the first message to the first device on the first time domain resource and/or the first frequency domain resource and before the second device receives the second indication information from the first device, the communication method provided in this embodiment of this application further includes: The second device changes the first information from the second value to the first value. In other words, when actively initiating access, a device adjusts the first information to the first value, and a device that does not perform active access adjusts the first information to the second value, so that a network side may select or trigger the device that performs only active access to access a network.

With reference to FIG. 11, an example of a communication method according to an embodiment of this application is provided. For related descriptions of step S601 to step S603, step S1104, and step S1105, refer to the embodiment shown in FIG. 11. Details are not described herein again. The second message in step S603 specifically indicates the second device whose first information is the first value to access the first device again.

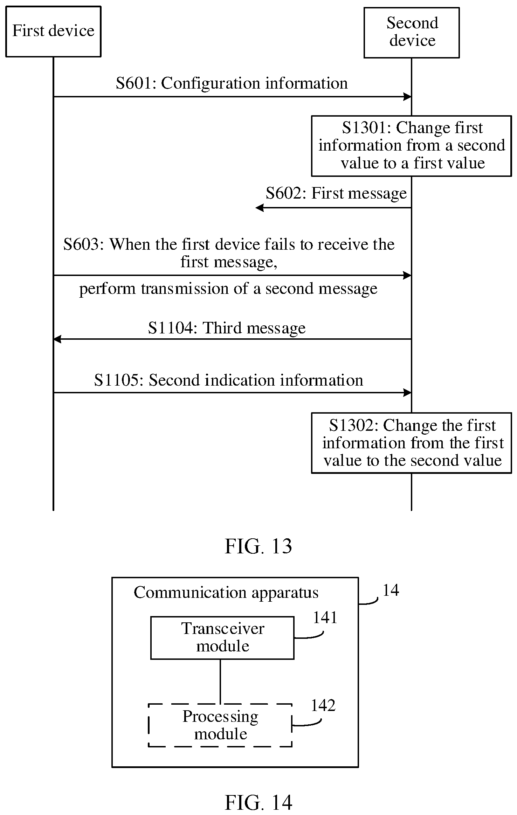

After step S601 and before step S603, the example shown in FIG. 13 may include the following step:
Step S1301: The second device changes the first information from the second value to the first value.

After step S1105 or after the second device receives the fifth indication information, the example shown in FIG. 13 may include the following step:
Step S1302: The second device changes the first information from the first value to the second value.

Optionally, the first information is defined for actively initiating access by a device, and the first information is used by the first device to indicate, to initiate access, a device that actively performs access or indicate, to perform access again, a device that actively initiates access but fails the access. In this solution, the first information may be added, and is specially used in a scenario of active initiation by the device, so that the first information is not easily confused with another flag bit. In step 1301, for a second device that does not actively perform access, the first information may be changed to the second value or the second value may be maintained.

Optionally, the first information is further used by the first device to indicate, when a service is triggered through paging, a paged device to perform access or indicate a paged device to perform access again after the paged device fails the access. In this solution, the first information may be reused with a flag bit used in an access scenario of the paged device, so that hardware or software implementation complexity of the device can be reduced. Paging refers to a procedure of terminal access triggered by downlink signaling. The second device may not perform adjustment of the first information value for active access in a paging process. In an active access process, the second device may not respond to a paging message or may not perform paging-related adjustment of the first information value.

For example, the first information may be an inventoried flag bit, or a flag bit used to page a device, for example, a status of a session in the inventoried flag bit included in the random access trigger message in step S102.

For example, after step S805 in FIG. 8, after step S1105 in FIG. 11, after step S1105 in FIG. 12, or after step S1105 in FIG. 13, the method may include the following steps:
Step S1401: The second device sends UL data and/or signaling to the first device. Correspondingly, the first device receives the uplink data and/or signaling from the second device.
Step S1402: The first device sends, to the second device, indication information for ending a communication procedure, and correspondingly, the second device receives the indication information from the first device. The indication information may further trigger a device other than the second device to access the first device. The indication information for ending the communication procedure is the fifth indication information. The fifth indication information has two functions: indicating that current communication of the second device ends, and simultaneously indicating that a next access occasion starts. The second device that selects the next access occasion may initiate an access procedure or a procedure of communicating with the first device.

For example, the indication information in step S1402 is query repetition signaling or a query command.

Both the first device and the second device in the foregoing embodiments may use the architecture of the communication apparatus 500 shown in FIG. 5. Therefore, the processor 501 or 507 in the communication apparatus 500 shown in FIG. 5 may invoke application program code stored in the memory 503, to instruct a terminal device to perform the actions of the first device in the foregoing embodiments, and the processor 501 or 507 in the communication apparatus 500 shown in FIG. 5 may invoke application program code stored in the memory 503, to instruct a network device to perform the actions of the second device in the foregoing embodiments. This is not limited in embodiments.

It may be understood that, in the foregoing embodiments, the method and/or the step implemented by the first device may alternatively be implemented by a component (for example, a chip or a circuit) that can be used for the first device, and the method and/or the step implemented by the second device may alternatively be implemented by a component (for example, a chip or a circuit) that can be used for the second device.

The foregoing mainly describes the solutions provided in embodiments of this application from a perspective of interaction between network elements. Correspondingly, embodiments of this application further provide a communication apparatus, and the communication apparatus is configured to implement the foregoing methods. The communication apparatus may be the first device in the foregoing method embodiments, an apparatus including the foregoing first device, or a component that can be used for the first device; or the communication apparatus may be the second device in the foregoing method embodiments, an apparatus including the foregoing second device, or a component that can be used for the second device. It may be understood that, to implement the foregoing functions, the communication apparatus includes a hardware structure and/or a software module for performing a corresponding function. A person skilled in the art should be easily aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into function modules based on the foregoing method embodiments. For example, each function module may be obtained through division based on each corresponding function, or two or more functions may be integrated into one processing module. The foregoing integrated module may be implemented in a form of hardware, or may be implemented in a form of a software function module. It should be noted that, in embodiments of this application, module division is an example, and is merely a logical function division. In an actual implementation, another division manner may be used.

FIG. 14 is a diagram of a structure of a communication apparatus 14. The communication apparatus 14 includes a transceiver module 141. The transceiver module 141 may also be referred to as a transceiver unit, and is configured to implement a transceiver function. For example, the transceiver module 141 may be a transceiver circuit, a transceiver machine, a transceiver, or a communication interface.

For example, the communication apparatus 14 is the first device in the foregoing method embodiments.

In this case, the transceiver module 141 is configured to send configuration information to a second device, where the configuration information is used by the second device to determine a first time domain resource and/or a first frequency domain resource for sending a first message when the second device actively initiates access, and the first message is used by the second device to request to access the first device. The transceiver module 141 is further configured to: when failing to receive the first message from the second device on the first time domain resource and/or the first frequency domain resource, send a second message to the second device, where the second message indicates the second device to access the first device again.

In a possible implementation, the transceiver module 141 is further configured to: when successfully receiving the first message from the second device on the first time domain resource and/or the first frequency domain resource, send second indication information to the second device, where the second indication information indicates that the second device succeeds in the access.

In a possible implementation, the first message includes a random number. The transceiver module 141 is further configured to send a fourth message to the second device, where the fourth message includes third indication information indicating to use two-step random access, or the fourth message includes configuration information corresponding to two-step random access.

In a possible implementation, the first message includes a preamble or a random number. The transceiver module 141 is further configured to send a fifth message to the second device, where the fifth message includes fourth indication information indicating to use four-step random access, or the fifth message includes configuration information corresponding to four-step random access.

For example, the communication apparatus 14 is the second device in the foregoing method embodiments. In this case, the transceiver module 141 is configured to receive configuration information from a first device. The configuration information is used by the second device to determine a first time domain resource and/or a first frequency domain resource for sending a first message when the second device actively initiates access, and the first message is used by the second device to request to access the first device. The transceiver module 141 is further configured to: when actively initiating access, send the first message to the first device on the first time domain resource and/or the first frequency domain. The transceiver module 141 is further configured to: when the first device fails to receive the first message from the second device on the first time domain resource and/or the first frequency domain resource, receive a second message from the first device, where the second message indicates the second device to access the first device again.

In a possible implementation, the transceiver module 141 is further configured to: when the first device successfully receives the first message from the second device on the first time domain resource and/or the first frequency domain resource, receive second indication information from the first device, where the second indication information indicates that the second device succeeds in the access.

In a possible implementation, the communication apparatus 14 further includes a processing module 142. The transceiver module 141 is configured to: after the second indication information from the first device is received via the transceiver module 141, change first information from a first value to a second value. A value of the first information of a device that actively initiates access and that fails the access is the first value; and a value of the first information of a device that actively initiates access and succeeds in the access or a value of the first information of a device that does not actively initiate access is the second value.

In a possible implementation, the communication apparatus 14 further includes a processing module 142. The processing module 142 is further configured to: before the first message is sent to the first device on the first time domain resource and/or the first frequency domain resource via the transceiver module 141, or when the first message is sent to the first device on the first time domain resource and/or the first frequency domain resource via the transceiver module 141, or after the first message is sent to the first device on the first time domain resource and/or the first frequency domain resource via the transceiver module 141 and before the second indication information is received from the first device via the transceiver module 141, change the first information from the second value to the first value.

In a possible implementation, the first message includes a random number. The transceiver module 141 is further configured to receive a fourth message from the first device, where the fourth message includes third indication information indicating to use two-step random access, or the fourth message includes configuration information corresponding to two-step random access.

In a possible implementation, the first message includes a preamble or a random number. The transceiver module 141 is further configured to receive a fifth message from the first device, where the fifth message includes fourth indication information indicating to use four-step random access, or the fifth message includes configuration information corresponding to four-step random access.

All related content of the steps in the foregoing method embodiments may be cited in function descriptions of the corresponding function modules. Details are not described herein again.

In this embodiment, the communication apparatus 14 is presented in a form of function modules obtained through division in an integrated manner. The "module" herein may be a specific ASIC, a circuit, a processor that executes one or more software or firmware programs, a memory, an integrated logic circuit, and/or another component that can provide the foregoing functions.

When the communication apparatus 14 is the first device or the second device in the foregoing method embodiments, in a simple embodiment, a person skilled in the art may figure out that the communication apparatus 14 may be in a form of the communication apparatus 500 shown in FIG. 5.

For example, the processor 501 or 507 in the communication apparatus 500 shown in FIG. 5 may invoke computer-executable instructions stored in the memory 503, to enable the communication apparatus 500 to perform the communication method in the foregoing method embodiments. Specifically, a function/implementation process of the transceiver module 141 in FIG. 14 may be implemented by using a communication module connected to the communication interface 504 in FIG. 5. Functions/implementation processes of the processing module 142 in FIG. 14 may be implemented by the processor 501 or 507 in the communication apparatus 500 shown in FIG. 5 by invoking the computer-executable instructions stored in the memory 503.

The communication apparatus 14 provided in this embodiment may perform the foregoing communication methods. Therefore, for technical effects that can be achieved by the communication apparatus 14, refer to the foregoing method embodiments. Details are not described herein again.

It should be noted that one or more of the foregoing modules or units may be implemented by using software, hardware, or a combination thereof. When any one of the foregoing modules or units is implemented by software, the software exists in a form of computer program instructions, and is stored in the memory. The processor may be configured to execute the program instructions and implement the foregoing method procedure. The processor may be built into a SoC (system on chip) or an ASIC, or may be an independent semiconductor chip. In addition to a core configured to execute software instructions to perform an operation or processing, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a chip system, including: at least one processor and an interface, where the at least one processor is coupled to a memory through an interface, and when the at least one processor executes a computer program or instructions in the memory, the method in any one of the foregoing method embodiments is performed. In a possible implementation, the communication apparatus further includes the memory. Optionally, the chip system may include a chip, or may include the chip and another discrete component. This is not specifically limited in this embodiment of this application.

All or some of the embodiments may be implemented by using software, hardware, firmware, or any combination thereof. When a software program is used to implement the embodiments, all or some of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, like a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

Although this application is described with reference to the embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, this specification and the accompanying drawings are merely example descriptions of this application defined by the appended claims, and are considered as any of or all modifications, variations, combinations or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A communication method, wherein the method comprises:
sending, by a first device, configuration information to a second device, wherein
the configuration information is used by the second device to determine a first time domain resource and/or a first frequency domain resource for sending a first message when the second device actively initiates access, and the first message is used by the second device to request to access the first device; and
when failing to receive the first message from the second device on the first time domain resource and/or the first frequency domain resource, sending, by the first device, a second message to the second device, wherein
the second message indicates the second device to access the first device again.

2. The method according to claim 1, wherein the second message comprises first indication information and/or the first time domain resource and/or the first frequency domain resource, wherein the first indication information and/or the first time domain resource and/or the first frequency domain resource indicate/indicates the second device that fails to access the first device on the first time domain resource and/or the first frequency domain resource to access the first device again.

3. The method according to claim 2, wherein the second message is further used by the second device to determine a second time domain resource and/or a second frequency domain resource for sending a third message, and the third message is used by the second device to request again to access the first device.

4. The method according to any one of claims 1 to 3, wherein the method further comprises:
when successfully receiving the first message from the second device on the first time domain resource and/or the first frequency domain resource, sending, by the first device, second indication information to the second device, wherein
the second indication information indicates that the second device succeeds in the access.

5. The method according to any one of claims 1 to 4, wherein that the second message indicates the second device to access the first device again comprises: the second message indicates the second device whose first information is a first value to access the first device again, wherein
a value of the first information of a device that actively initiates access and that fails the access is the first value; and a value of the first information of a device that actively initiates access and succeeds in the access or a value of the first information of a device that does not actively initiate access is a second value.

6. The method according to claim 5, wherein the first information is defined for actively initiating access by a device, and the first information is used by the first device to indicate, to initiate access, a device that actively performs access or indicate, to perform access again, a device that actively initiates access but fails the access.

7. The method according to claim 5, wherein the first information is further used by the first device to indicate, when a service is triggered through paging, a paged device to perform access or indicate a paged device to perform access again after the paged device fails the access.

8. The method according to any one of claims 1 to 7, wherein the first message comprises a random number, and the method further comprises:
sending, by the first device, a fourth message to the second device, wherein the fourth message comprises third indication information indicating to use two-step random access, or the fourth message comprises configuration information corresponding to two-step random access.

9. The method according to any one of claims 1 to 7, wherein the first message comprises a preamble or a random number, and the method further comprises:
sending, by the first device, a fifth message to the second device, wherein the fifth message comprises fourth indication information indicating to use four-step random access, or the fifth message comprises configuration information corresponding to four-step random access.

10. A communication method, wherein the method comprises:
receiving, by a second device, configuration information from a first device, wherein
the configuration information is used by the second device to determine a first time domain resource and/or a first frequency domain resource for sending a first message when the second device actively initiates access, and the first message is used by the second device to request to access the first device;
when actively initiating the access, sending, by the second device, the first message to the first device on the first time domain resource and/or the first frequency domain; and
when the first device fails to receive the first message from the second device on the first time domain resource and/or the first frequency domain resource, receiving, by the second device, a second message from the first device, wherein
the second message indicates the second device to access the first device again.

11. The method according to claim 10, wherein the second message comprises first indication information and/or the first time domain resource and/or the first frequency domain resource, wherein the first indication information and/or the first time domain resource and/or the first frequency domain resource indicate/indicates the second device that fails to access the first device on the first time domain resource and/or the first frequency domain resource to access the first device again.

12. The method according to claim 11, wherein the second message is further used by the second device to determine a second time domain resource for sending a third message, and the third message is used by the second device to request again to access the first device.

13. The method according to any one of claims 10 to 12, wherein the method further comprises:
when the first device successfully receives the first message from the second device on the first time domain resource and/or the first frequency domain resource, receiving, by the second device, second indication information from the first device, wherein
the second indication information indicates that the second device succeeds in the access.

14. The method according to claim 13, wherein after the receiving, by the second device, second indication information from the first device, the method further comprises:
changing, by the second device, first information from a first value to a second value, wherein
a value of the first information of a device that actively initiates access and that fails the access is the first value; and a value of the first information of a device that actively initiates access and succeeds in the access or a value of the first information of a device that does not actively initiate access is the second value.

15. The method according to claim 14, wherein before the second device sends the first message to the first device on the first time domain resource and/or the first frequency domain resource, when the second device sends the first message to the first device on the first time domain resource and/or the first frequency domain resource, or after the second device sends the first message to the first device on the first time domain resource and/or the first frequency domain resource and before the second device receives second indication information from the first device, the method further comprises:
changing, by the second device, the first information from the second value to the first value.

16. The method according to claim 14 or 15, wherein that the second message indicates the second device to access the first device again comprises: the second message indicates the second device whose first information is the first value to access the first device again.

17. The method according to any one of claims 14 to 16, wherein the first information is defined for actively initiating access by a device, and the first information is used by the first device to indicate, to initiate access, a device that actively performs access or indicate, to perform access again, a device that actively initiates access but fails the access.

18. The method according to any one of claims 14 to 16, wherein the first information is further used by the first device to indicate, when a service is triggered through paging, a paged device to perform access or indicate a paged device to perform access again after the paged device fails the access.

19. The method according to any one of claims 10 to 18, wherein the first message comprises a random number, and the method further comprises:
receiving, by the second device, a fourth message from the first device, wherein
the fourth message comprises third indication information indicating to use two-step random access, or
the fourth message comprises configuration information corresponding to two-step random access.

20. The method according to any one of claims 10 to 18, wherein the first message comprises a preamble or a random number, and the method further comprises:
receiving, by the second device, a fifth message from the first device, wherein
the fifth message comprises fourth indication information indicating to use four-step random access, or
the fifth message comprises configuration information corresponding to four-step random access.

21. A first device, wherein the first device comprises a transceiver module, wherein
the transceiver module is configured to send configuration information to a second device, wherein
the configuration information is used by the second device to determine a first time domain resource and/or a first frequency domain resource for sending a first message when the second device actively initiates access, and the first message is used by the second device to request to access the first device; and
the transceiver module is further configured to: when failing to receive the first message from the second device on the first time domain resource and/or the first frequency domain resource, send a second message to the second device, wherein
the second message indicates the second device to access the first device again.

22. A second device, wherein the second device comprises a transceiver module, wherein
the transceiver module is configured to receive configuration information from a first device, wherein
the configuration information is used by the second device to determine a first time domain resource and/or a first frequency domain resource for sending a first message when the second device actively initiates access, and the first message is used by the second device to request to access the first device;
the transceiver module is further configured to: when actively initiating the access, send the first message to the first device on the first time domain resource and/or the first frequency domain; and
the transceiver module is further configured to: when the first device fails to receive the first message from the second device on the first time domain resource and/or the first frequency domain resource, receive a second message from the first device, wherein
the second message indicates the second device to access the first device again.

23. A communication system, wherein the communication system comprises a first device and a second device, wherein the first device is configured to perform the communication method according to any one of claims 1 to 9, and the second device is configured to perform the communication method according to any one of claims 10 to 20.

24. A communication apparatus, comprising a memory and a processor coupled to the memory, wherein the memory is configured to store a program, the processor is configured to execute the program stored in the memory, and when the communication apparatus runs, the processor runs the program, to enable the communication apparatus to perform the communication method according to any one of claims 1 to 9, or to enable the communication apparatus to perform the communication method according to any one of claims 10 to 20.

25. A computer-readable storage medium, wherein the computer-readable storage medium stores a computer program or instructions, and when the computer program or instructions are run, the communication method according to any one of claims 1 to 9 is implemented, or the communication method according to any one of claims 10 to 20 is implemented.
